(19) Europäisches Patentamt
European Patent Office
Office européen des brevets

(11) **EP 4 057 568 A1**

(12) **DEMANDE DE BREVET EUROPEEN**

(43) Date de publication:
**14.09.2022 Bulletin 2022/37**

(21) Numéro de dépôt: **22160915.9**

(22) Date de dépôt: **08.03.2022**

(51) Classification Internationale des Brevets (IPC):
**H04L 9/32** (2006.01)

(52) Classification Coopérative des Brevets (CPC):
**H04L 9/3239; H04L 9/50**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **09.03.2021 FR 2102287**

(71) Demandeur: **COMMISSARIAT À L'ÉNERGIE ATOMIQUE ET AUX ÉNERGIES ALTERNATIVES**
**75015 Paris (FR)**

(72) Inventeur: **HENNEBERT, Christine**
**38054 GRENOBLE CEDEX 09 (FR)**

(74) Mandataire: **Brevalex**
**56, Boulevard de l'Embouchure**
**B.P. 27519**
**31075 Toulouse Cedex 2 (FR)**

(54) **MÉTHODE DE VÉRIFICATION DE L'HABILITATION D'UN TERMINAL A CONTRÔLER UN ATTRIBUT D'IDENTITÉ D'UN UTILISATEUR**

(57) La présente invention concerne une méthode d'interrogation par un terminal d'une carte d'identité électronique (CNIe) au moyen d'une assertion portant sur un attribut d'identité du détenteur de cette carte. Le terminal obtient tout d'abord un jeton d'identité de la CNIe (710) puis sélectionne dans un portefeuille HD, un compte émetteur associé à l'attribut d'identité sur lequel porte l'assertion. Il forme ensuite une transaction (720) comprenant en arguments le jeton d'identité et le chemin dans l'arborescence du portefeuille conduisant au compte émetteur, cette transaction étant ensuite transmise à une chaine de blocs (725). On vérifie ensuite par consensus que le terminal est habilité à émettre une assertion portant sur un attribut d'identité (730), et que l'adresse d'émission de la transaction correspond bien à l'attribut d'identité sur lequel le terminal est habilité à émettre une assertion (735).

FIG.7A

EP 4 057 568 A1

**Description**

**DOMAINE TECHNIQUE**

La présente invention concerne le domaine des cartes d'identité électroniques (CNIe). Elle concerne également celui des chaines de blocs (*blockchains*) et plus particulièrement celui des portefeuilles de clés hiérarchiques déterministes permettant de signer des transactions sur des chaînes de blocs.

**ÉTAT DE LA TECHNIQUE ANTÉRIEURE**

Un grand nombre de pays ont d'ores et déjà adopté ou adopteront prochainement des cartes d'identité électronique (CNIe) en lieu et place des cartes d'identité traditionnelles sous forme de carte plastifiée. Les CNIe intègrent une puce électronique adaptée à émettre des jetons (*tokens*) permettant de vérifier l'identité de son détenteur. Ces cartes d'identité électroniques sont émises par une autorité administrative et les données qu'elles contiennent sont issues d'un registre centralisé.

Il est récemment apparu le besoin de recourir à un identifiant numérique décentralisé ou DID (*Decentralized IDentifier*), actuellement en cours de normalisation par l'IETF. Un identifiant numérique décentralisé est un identifiant unique d'une personne (voire d'un objet, d'une organisation ou d'une entité abstraite) qui peut être vérifié par un contrôleur en faisant appel à des informations stockées à l'extérieur de la CNIe. Ces informations peuvent être des éléments d'identification, dénommés attributs d'identité, généralement stockés dans des bases de données ou des dispositifs d'un système d'information. Une chaine de blocs (*blockchain*) est généralement utilisée conjointement avec ces bases de données pour stocker les références et les liens permettant de vérifier ces éléments d'identification. Une description de l'identifiant numérique décentralisé pourra être trouvée dans le document intitulé « Decentralized Identifiers (DIDs) v1.0W3C Working Draft » publié par le consortium W3C le 20 Janvier 2021.

Différents exemples d'identité décentralisée sont connus de l'état de la technique, tels que uPort, Sovrin et ShoCard.

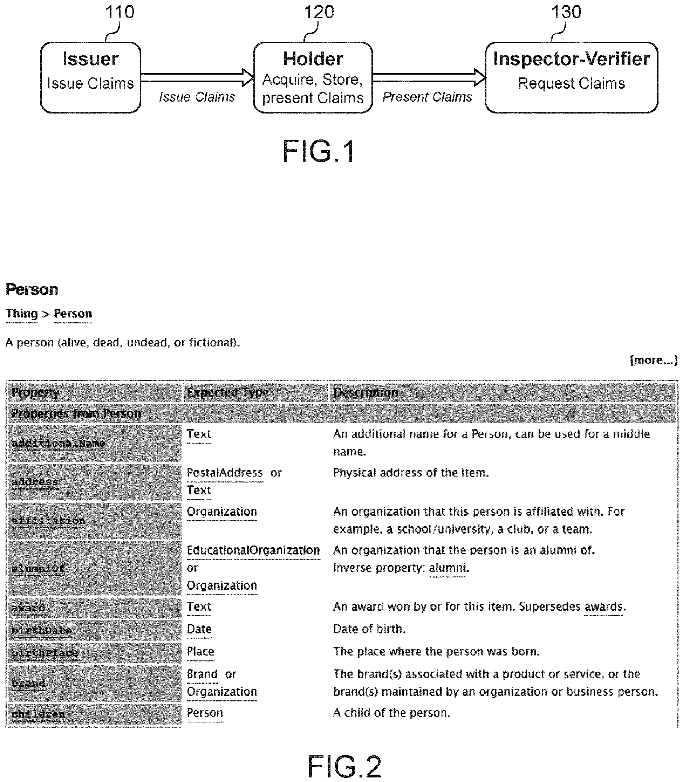

Le principe de fonctionnement d'une identité décentralisée (DID) a été illustré en Fig. 1. Il fait intervenir un ordonnateur (*Issuer*), 110, un détenteur d'un titre d'identité (*Holder*), 120 et un vérificateur (*Verifier*). L'ordonnateur émet une question (*claim*) portant sur un attribut d'identité du détenteur, 120, par exemple une question liée à son âge (personne majeure ?). Le détenteur présente un élément cryptographique lié à son attribut d'identité, vérifiable par le vérificateur. Le vérificateur vérifie l'élément fourni et renvoie la réponse à la question posée (booléen « vrai » ou «faux») à l'ordonnateur.

L'opération représentée en Fig. 1 suppose que l'on puisse vérifier que l'ordonnateur est bien en droit de poser la question portant sur l'attribut d'identité et que le vérificateur puisse s'assurer que le détenteur est bien associé à l'attribut d'identité en question.

De manière similaire, il est prévu qu'un terminal (*ordonnateur*) puisse émettre une question portant sur un attribut d'identité d'un détenteur d'une CNIe. Les problèmes de vérification évoqués ci-dessus se posent alors dans les mêmes termes. En particulier, il est nécessaire de s'assurer que le terminal en question soit habilité à poser une question sur un attribut d'identité du détenteur et que cette habilitation soit elle-même consultable par le détenteur.

L'objet de la présente invention est par conséquent de proposer une méthode de vérification de l'habilitation d'un terminal à poser une question sur un attribut d'identité du détenteur d'une CNIe. Un objet subsidiaire de la présente invention est de proposer une méthode d'interrogation portant sur un attribut d'identité du détenteur d'une CNIe.

**EXPOSÉ DE L'INVENTION**

La présente invention est définie par une méthode d'interrogation par un terminal d'une carte d'identité électronique, dite CNIe, au moyen d'une assertion portant sur un attribut d'identité du détenteur de cette carte, ledit attribut d'identité faisant partie d'une arborescence d'attributs d'identité, ladite méthode étant originale en ce qu'elle comprend :

(a) l'obtention par le terminal d'un jeton d'identité du détenteur de la CNIe ;
(b) la sélection par le terminal d'un compte émetteur associé à un nœud dans l'arborescence d'un portefeuille de clés hiérarchique déterministe, dit portefeuille HD, de même structure que l'arborescence d'attributs d'identité, le nœud sélectionné correspondant de manière univoque à l'attribut d'identité sur lequel porte l'assertion ;
(c) la formation par le terminal d'une transaction comprenant en arguments au moins le jeton d'identité et le chemin dans l'arborescence du portefeuille conduisant au compte émetteur ;
(d) l'émission par le terminal de ladite transaction à destination d'un premier contrat intelligent déployé sur une chaine de blocs ;
(e) la vérification par consensus que le terminal est habilité à émettre une assertion sur ledit attribut d'identité ;

(f) la vérification par consensus que l'adresse d'émission de la transaction correspond bien à l'attribut d'identité sur lequel le terminal est habilité à émettre une assertion ;

(g) l'inscription d'une autorisation d'interrogation dans la chaine de blocs si les vérifications des étapes (e) et (f) sont positives.

Le jeton d'identité comprend typiquement un identifiant numérique du détenteur de la CNIe ainsi qu'un nonce signé par une clé privée stockée dans la CNIe.

Avantageusement, la vérification de l'étape (e) comprend la consultation d'un enregistrement de ladite habilitation dans la chaine de blocs, la vérification d'une signature électronique de cet enregistrement au moyen de la clé publique d'une autorité d'habilitation et, en cas de succès, l'extraction du chemin dans l'arborescence du portefeuille HD conduisant au compte émetteur ainsi que la chaine de code associée au compte du terminal.

Ladite habilitation est enregistrée de préférence dans la chaine de blocs au moyen d'un second contrat intelligent distinct du premier.

Avantageusement, la vérification à l'étape (f) comprend une vérification que la signature de la transaction est bien correcte au moyen de la clé publique du terminal.

Elle peut en outre comprendre un calcul de la clé publique du compte émetteur à partir de la clé publique du terminal, de la chaine de code associée au compte du terminal ainsi que du chemin dans l'arborescence conduisant au compte émetteur.

La vérification de l'étape (f) peut en outre comprendre une comparaison de l'adresse du compte émetteur de la transaction avec un haché de la clé publique du compte émetteur ainsi calculée, l'autorisation d'interrogation étant inscrite dans la chaine de blocs en cas d'identité.

Dans tous les cas, le terminal peut ensuite émettre une requête à un serveur d'attributs d'identité, ladite requête représentant ladite assertion sur l'attribut d'identité et le serveur d'attributs d'identité consultant la chaine de blocs pour déterminer si une autorisation a été délivrée au terminal d'interrogation en relation avec ledit attribut d'identité.

Si le serveur d'attributs d'identité détermine que l'autorisation a bien été délivrée, il demande une vérification de la validité de la CNIe à un serveur de contrôle d'identité, ce dernier vérifiant la validité de la CNIe à partir du jeton d'identité lu dans la chaine de blocs.

Si la CNIe est déterminée comme valide, le serveur d'attributs d'identité construit la réponse à l'assertion portant sur l'attribut d'identité à partir d'une base de données de ces attributs et transmet la réponse au terminal.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 déjà décrite représente schématiquement le principe de fonctionnement d'une identité décentralisée ;

La Fig. 2 représente de manière schématique un exemple de codification d'attributs d'identité du détenteur d'une CNIe ;

La Fig. 3 représente de manière schématique un portefeuille de clés hiérarchique déterministe ;

La Fig. 4A représente de manière schématique une première méthode pour générer les clés privées d'un portefeuille de clés hiérarchique déterministe ;

La Fig. 4B représente de manière schématique une seconde méthode pour générer les clés privées d'un portefeuille de clés hiérarchique déterministe ;

La Fig. 4C représente de manière schématique une méthode pour générer les clés publiques d'un portefeuille de clés hiérarchique déterministe ;

La Fig. 5A représente une arborescence d'attributs d'identité et la Fig. 5B représente une arborescence correspondante de clés dans un portefeuille hiérarchique déterministe ;

La Fig. 6 représente schématiquement un cas d'usage d'une méthode d'interrogation par un terminal au moyen d'une assertion portant sur un attribut d'identité du détenteur d'une CNIe ;

Les Figs. 7A et 7B représentent schématiquement une méthode d'interrogation par un terminal au moyen d'une assertion portant sur un attribut d'identité du détenteur d'une CNIe ;

La Fig. 8 représente schématiquement une méthode de vérification de l'habilitation d'un terminal à formuler une assertion portant sur un attribut d'identité ;

La Fig. 9 représente schématiquement une méthode de vérification de la conformité d'une transaction à ladite habilitation du terminal.

**EXPOSÉ DÉTAILLÉ DE MODES DE RÉALISATION PARTICULIERS**

On considérera dans la suite une carte d'identité électronique ou CNIe, telle qu'introduite précédemment. Elle embarque des éléments cryptographiques dans une zone mémoire permettant d'identifier le détenteur de la carte de manière unique, par exemple un couple de clé privée, clé publique d'un cryptosystème à clé publique, par exemple un cryptosystème asymétrique voire un cryptosystème sur courbe elliptique. Ce cryptosysème est associé de manière unique à l'identité numérique du détenteur de la carte en question. La clé privée du cryptosystème asymétrique est stockée dans un composant de sécurité de la CNIe assurant sa protection contre les attaques logiques et physiques.

Une telle CNIe est capable d'émettre des jetons d'identité sur requête d'un terminal d'interrogation. Ces jetons peuvent être signés au moyen de la clé privée associée à l'identité numérique stockée dans la carte. Par exemple, ces jetons peuvent incorporer un identifiant numérique du détenteur de la CNIe ainsi qu'un nonce signé par une clé privée stockée dans la CNIe, la présence du nonce permettant d'éviter les attaques par rejeu

Le terminal d'interrogation peut être amené à formuler une requête sur un attribut d'identité du détenteur d'une CNIe. Par exemple, un commerçant peut avoir à déterminer, au moyen d'un tel terminal, si le client est majeur ou mineur, ou une administration peut avoir à vérifier la nationalité du détenteur de la CNIe. Toutefois, le terminal ne peut arbitrairement interroger la CNIe, il doit posséder une habilitation spécifique pour pouvoir poser une question (encore dénommée assertion vérifiable ou plus simplement assertion) sur tel ou tel attribut d'identité, dans la mesure où l'accès aux attributs d'identité et leur traitement doivent être effectués en respectant la protection des données personnelles, selon la réglementation RGPD. Cette vérification doit être garantie de manière certaine, si possible dès la conception (*by design*).

La question se présente généralement sous la forme d'une assertion vérifiable (*verifiable claim*) portant sur un attribut d'identité, par exemple sur l'âge ou la nationalité du détenteur de la CNIe. Ainsi, par exemple, la question pourra être « la personne détentrice de la CNIe est-elle majeure ? » ou encore « quelle est la nationalité de la personne détentrice de la CNIe ? ». La réponse pourra selon le cas être une valeur booléenne (premier exemple) ou une série de caractères alphanumériques (second exemple). Il convient de noter que la valeur elle-même de l'attribut n'est pas nécessairement divulguée dans la réponse. Ainsi la condition de majorité ne révèle pas l'âge de la personne.

Nous supposerons dans la suite que les attributs d'identité sont distribués selon un graphe normalisé et plus précisément par un arbre dont la racine est l'identité du détenteur et les nœuds sont des attributs ou des champs d'attribut. Dans la suite, par commodité, les champs d'attribut seront assimilés à des attributs.

Le graphe des attributs d'identité peut être représenté au moyen d'un fichier en langage balisé tel que JSON par exemple. La Fig. 2 donne un exemple d'un tel fichier donnant les attributs d'une personne. Dans cet exemple, l'âge de la personne peut être déduit de l'attribut « date de naissance » situé ici en 6$^{ème}$ position. Cet attribut comporte 3 champs d'attribut : jour/mois/année situés respectivement en 1$^{ère}$, 2$^{nde}$ et 3$^{ème}$ positions. L'année de naissance du détenteur de la CNIe est ainsi codé par un chemin 0/6/3 dans l'arbre des attributs, ou de manière équivalente dans le fichier balisé. De manière générale, chaque attribut ou chaque champ d'attribut peut être représenté par un chemin dans l'arbre des attributs.

L'idée à la base de la présente invention est de coder dès la conception le droit d'un terminal d'émettre une assertion sur un attribut, autrement dit le droit de poser une question sur un attribut d'identité, en embarquant dans ce terminal un portefeuille de clés hiérarchique déterministe (HD *wallet)*, chaque nœud de l'arbre des clés correspondant de manière univoque à un attribut d'identité, voire au champ d'un tel attribut.

On rappelle que, dans un portefeuille de clés hiérarchique déterministe, toutes les clés privées sont générées, de manière arborescente, à partir d'un même germe. Autrement dit, la connaissance du germe permet de retrouver l'ensemble des clés privées du portefeuille.

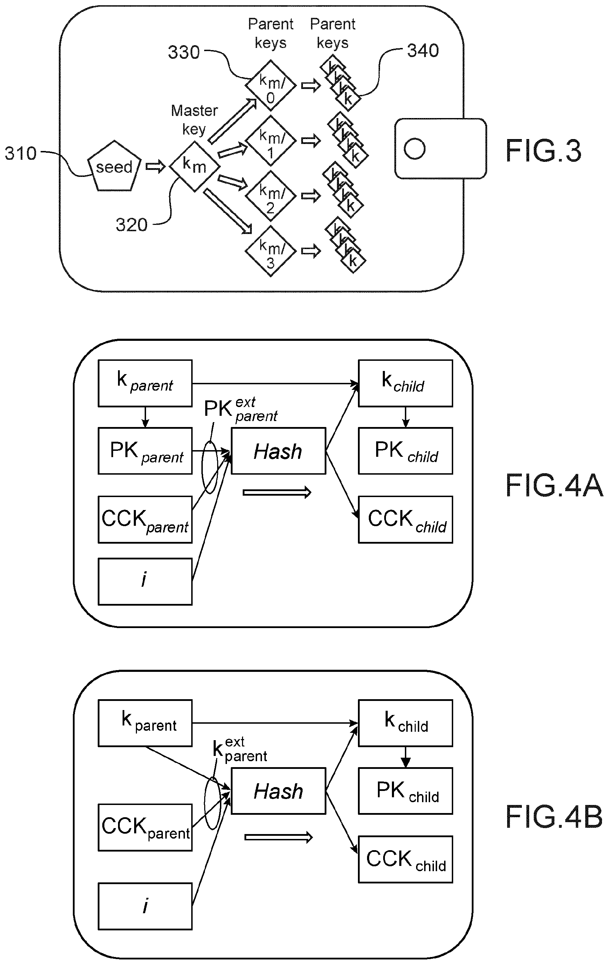

La Fig. 3 représente de manière schématique la structure d'un tel portefeuille hiérarchique déterministe.

Le germe, 310, à l'origine du portefeuille de clés est un nombre aléatoire (ou entropie), par exemple sur 128 ou 256 bits. Il est généralement représenté par un code mnémonique constitué de 12 ou 24 mots tirés d'un dictionnaire prédéterminé comportant un nombre de mots prédéterminé (2048).

Le germe est ensuite haché (par exemple au moyen de la fonction de hachage HMAC-SHA 512), pour fournir d'une part une clé privée maîtresse, 320, ($k_m$ ) et un code de chaîne associé (non représenté).

La clé publique maîtresse est ensuite calculée à partir de la clé privée maîtresse au moyen de $PK_m = k_m.G$ où G est le point générateur de la courbe elliptique.

A chaque génération, on obtient à partir d'une clé privée parent, 330, du code de chaîne associée à cette clé et d'un numéro d'index, $i$ , une clé privée enfant, 340, de rang de naissance $i + 1$ (le premier enfant correspondant à l'indice nul). La génération de la clé privée fait intervenir une fonction de hachage (ou une combinaison de fonctions de hachage) interdisant de pouvoir remonter à une clé privée parent à partir de la clé privée d'un enfant.

La génération des clés privées dans un portefeuille hiérarchique déterministe peut être réalisée selon différentes méthodes.

La Fig. 4A représente une première méthode de génération de clés privées dans un portefeuille hiérarchique déterministe.

On a représenté à gauche de la figure les éléments relatifs à une clé privée parent et à droite ceux relatifs à une clé privée enfant, issue de cette clé privée parent.

La clé privée parent, $k_{parent}$, permet tout d'abord de générer la clé publique correspondante du cryptosystème asymétrique, par exemple $PK_{parent} = k_{parent}G$ dans le cas d'un cryptosystème sur courbe elliptique.

La clé publique parent $PK_{parent}$ est concaténée à la chaîne de code, $CCK_{parent}$, associée pour former une clé publique étendue $PK_{parent}^{ext} = PK_{parent} \big| CCK_{parent}$. Cette clé publique étendue est combinée avec l'index, i, de la clé enfant que l'on souhaite générer, puis l'ensemble est haché au moyen d'une fonction de hachage, *Hash*.

Le résultat du hachage est divisé en une partie gauche et une partie droite. La partie gauche est combinée avec la clé privée parent, $k_{parent}$, pour donner la clé privée enfant, $k_{child}$ tandis que la partie droite donne la chaîne de code associée à la clé enfant, soit $CCK_{child}$. La clé privée enfant, $k_{child}$, permet de générer la clé publique enfant, $PK_{child} = k_{child}G$.

On dispose par conséquent des éléments $k_{child}, PK_{child}, CCK_{child}$ permettant d'itérer une nouvelle fois la génération de clés privées.

L'opération de génération permettant de passer d'une clé privée parent à une clé enfant d'indice *i* est notée ici $CKD_{priv}^{n}$. Autrement dit :

$$k_{child} = CKD_{priv}^{n}\left(k_{parent}, i\right) \tag{1}$$

et donc, par récurrence :

$$k_{child} = CKD_{priv}^{n}\left(...CKD_{priv}^{n}\left(CKD_{priv}^{n}\left(k_{m}, i_{1}\right), i_{2}\right), ..., i_{N}\right) \tag{2}$$

où *N* est la longueur du chemin dans l'arborescence à compter du germe, et où $i_{1}, ..., i_{N}$ est la succession des indices des clés enfants le long du chemin.

La Fig. 4B représente une seconde méthode de génération de clés privées dans un portefeuille hiérarchique déterministe.

Cette méthode de génération, dite renforcée (*hardened*), par opposition à la méthode précédente, dite normale, utilise une clé privée étendue au lieu d'une clé publique étendue pour générer une clé privée de la génération suivante. Elle est *a priori* plus robuste que la méthode normale puisqu'elle omet du calcul une information publique.

Comme précédemment, on a représenté à gauche de la figure les éléments relatifs à une clé privée parent et à droite ceux relatifs à une clé privée enfant, issue de cette clé privée parent.

La clé privée parent, $k_{parent}$, est concaténée avec la chaîne de code associée pour former une clé privée étendue $k_{parent}^{ext} = k_{parent} \big| CCk_{parent}$.

Cette clé privée étendue est combinée avec l'indice, i, de la clé enfant que l'on souhaite générer, puis l'ensemble est haché au moyen d'une fonction de hachage, *Hash*.

Le résultat du hachage est divisé en une partie gauche et une partie droite. La partie gauche est combinée comme précédemment avec la clé privée parent, $k_{parent}$, pour donner la clé privée enfant, $k_{child}$ tandis que la partie droite donne la chaîne de code associée à la clé enfant, soit $CCk_{child}$. La clé privée enfant, $k_{child}$, permet à son tour de générer la clé publique enfant, $PK_{child} = k_{child}G$.

L'opération de génération permettant de passer d'une clé privée parent à une clé enfant d'indice i est appelée opération de génération renforcée et notée $CKD_{priv}^{h}$ Autrement dit :

$$k_{child} = CKD_{priv}^{h}\left(k_{parent}, i\right) \tag{3}$$

Si l'on n'utilise que des opérations de génération renforcée, on obtient par récurrence :

$$k_{child} = CKD^h_{priv}\left(...CKD^h_{priv}\left(CKD^h_{priv}\left(k_m, i_1\right), i_2\right)\right),...,i_N\right) \qquad (4)$$

où, comme précédemment N est la longueur du chemin dans l'arborescence à compter du germe, et où $i_1,...,i_N$ est la succession des indices des clés enfants le long du chemin.

On notera que la génération d'une clé privée du portefeuille peut faire intervenir successivement des opérations de génération normale et des opérations de génération renforcée le long du chemin. Ainsi, plus généralement, cette clé privée sera obtenue par :

$$k_{child} = CKD_{priv}\left(...CKD_{priv}\left(CKD_{priv}\left(k_m, i_1\right), i_2\right)\right),...,i_N\right) \qquad (5)$$

où chaque opération de génération élémentaire $CKD_{priv}$ peut être une opération de génération normale $CKD^n_{priv}$ ou une opération de génération renforcée $CKD^h_{priv}$.

De manière pratique, les indices i utilisés dans les opérations de génération normale et les opérations de génération renforcée prennent leurs valeurs dans des intervalles distincts. Ainsi, les indices allant de 0 à $2^{31}-1$ sont utilisés pour générer des clés privées selon une opération de génération normale et les indices allant de $2^{31}$ à $2^{32}-1$ sont utilisés pour générer des clés privées selon une opération de génération renforcée.

Dans tous les cas, une clé privée pourra être identifiée au moyen d'un chemin dans l'arborescence à partir de la clé maîtresse. Ainsi, par exemple, $k_m$ /0/3 désignera la clé privée de seconde génération, 4ème enfant normal de la clé parent, elle-même premier enfant normal de la clé privée maîtresse. De même, $k_m$ / 0 / 3' désignera la clé privée de seconde génération, 4ème enfant renforcé de la clé parent, elle-même premier enfant normal de la clé privée maîtresse, où l'on prend pour convention $i' = i + 2^{31}$.

Une propriété particulièrement intéressante des portefeuilles de clés HD est la possibilité de déduire toutes les clés publiques des enfants à partir de la clé publique maîtresse et des chaînes de codes, sans à connaître les clés privées des enfants.

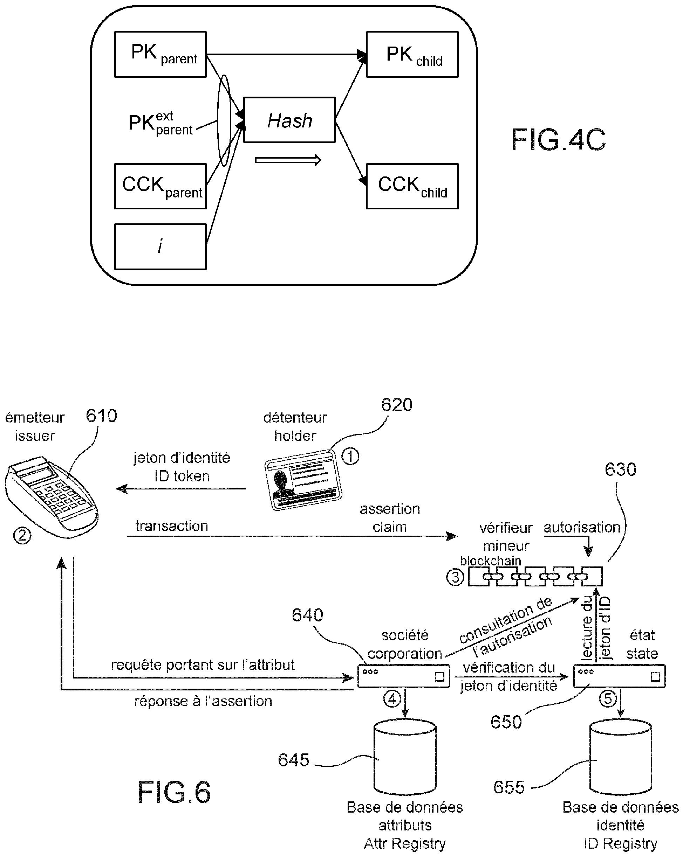

Cette propriété est illustrée en Fig. 4C.

La clé publique étendue d'un parent $PK^{ext}_{parent} = PK_{parent}\big|CCK_{parent}$ , autrement dit la clé publique d'un parent, $PK_{parent}$, concaténée avec sa chaine de code, $CCK_{parent}$, est combinée avec l'indice i de la clé enfant pour lequel on souhaite obtenir la clé publique.

L'ensemble est haché au moyen d'une fonction de hachage, *Hash* et le résultat du hachage est divisé en une partie gauche et une partie droite. La partie gauche est combinée comme avec la clé publique parent, $PK_{parent}$, pour donner la clé privée enfant, $PK_{child}$ tandis que la partie droite donne la chaîne de code associée à la clé enfant, soit $CCK_{child}$.

L'opération permettant de passer de la clé publique parent $PK_{parent}$ à la clé publique $PK_{child}$ d'un enfant d'indice $i$ est notée $PK_{child} = CKD_{pub}(PK_{parent}, i)$.

Ainsi, la clé publique d'un nœud de l'arborescence pourra être obtenue de manière itérative à partir de la clé publique maîtresse :

$$PK_{child} = CKD_{pub}\left(...CKD_{pub}\left(CKD_{pub}\left(PK_m, i_1\right), i_2\right)\right),...,i_N\right) \qquad (6)$$

où $i_1,...,i_N$ est la succession des indices des clés enfants le long du chemin se terminant par ce nœud.

Les portefeuilles hiérarchiques déterministes ont fait l'objet d'une normalisation dans les documents BIP-32 et BIP-44. On pourra trouver une description détaillée des portefeuilles hiérarchiques déterministes dans l'ouvrage de A.M. Antonopoulos et G. Wood intitulé « Mastering Ethereum » publié chez O'Reilly en Déc. 2018, pp. 79-97.

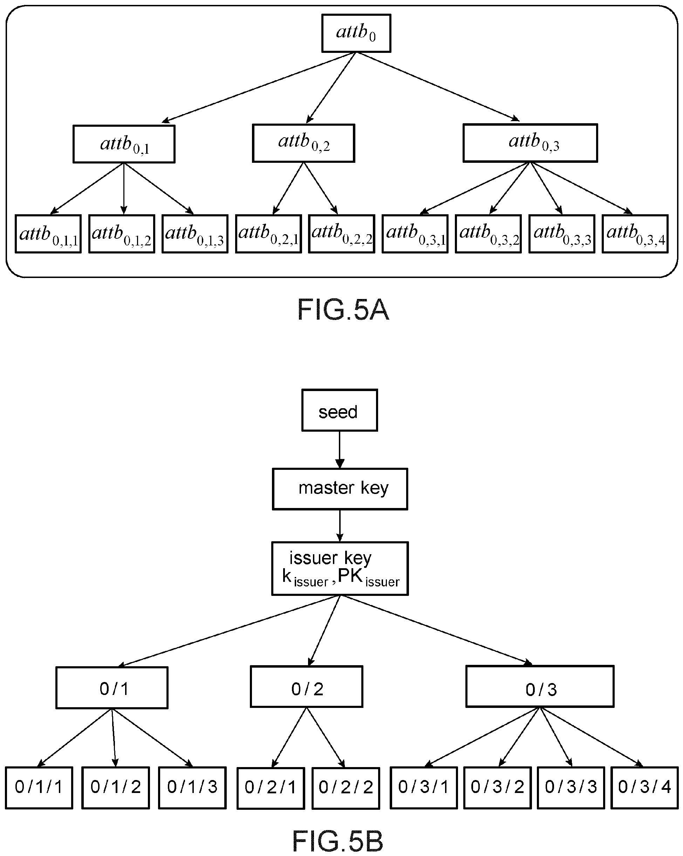

La mise en correspondance entre l'arbre des attributs d'identité et l'arbre des clés du portefeuille HD embarqué par le terminal a été illustrée dans les Figs. 5A et 5B.

La Fig. 5A représente l'arbre des attributs d'identité à partir de la racine $attb_0$ correspondant à l'identité numérique du détenteur de la CNIe. Les attributs dépendant directement de la racine, $attb_{0,1}, attb_{0,2}, attb_{0,3}$ sont des attributs de premier rang, et ceux dépendant directement de ces derniers sont des attributs de second rang,

$attb_{0,1,1}, attb_{0,1,2}, ..., attb_{0,3,3}, attb_{0,3,4}$. Ainsi, en reprenant l'exemple du fichier d'attributs de la Fig. 2, $attb_{0,6,3}$ représenterait l'année de naissance du détenteur de la CNIe. Chaque attribut d'identité $attb_{0,i_1,...,i_N}$ est ainsi défini par un chemin $0/i_1/i_2/../i_N$ à partir de la racine.

La Fig. 5B représente un portefeuille de clés hiérarchique déterministe correspondant à l'arbre des attributs d'identité de la Fig. 5A.

La clé privée du terminal, $k_{issuer}$ est obtenue à partir de la clé privée maitresse elle-même dérivée du germe secret. La clé publique du terminal est obtenue à partir de sa clé privée : $PK_{issuer} = k_{issuer}.G$.

La clé publique $PK_{issuer}$ est utilisée pour générer un arbre de clés publiques ayant la même structure que l'arbre des attributs d'identité, selon le schéma expliqué en relation avec la Fig. 4C.

Chaque nœud de l'arborescence est identifié par une suite d'indices représentant un chemin parcouru à partir de la racine correspondant au couple formé par la clé privée $k_{issuer}$ et la clé publique correspondante, $PK_{issuer}$, du terminal. Cette racine est conventionnellement représentée par l'indice 0.

Ainsi, la clé publique d'un nœud défini par le chemin $0/i_1/i_2/../i_N$ correspond à l'attribut d'identité $attb_{0,i_1,...,i_N}$. A chaque nœud défini par le chemin $0/i_1/i_2/../i_N$ est associé un compte de portefeuille dont l'adresse, @ $wallet\_account_{0,i_1/../i_N}$ est obtenue par hachage de sa clé publique :

$$PK_{0/i_1/../i_N} = CKD_{pub}\left(...CKD_{pub}\left(CKD_{pub}\left(PK_{issuer},\right),i_1\right)\right),...,i_N\right) \qquad (7\text{-}1)$$

$$@wallet\_account_{0/i_1/.../i_N} = Hash\left(PK_{0/i_1/../i_N}\right) \qquad (7\text{-}2)$$

La Fig. 6 représente de manière schématique un cas d'usage mettant en œuvre une méthode d'interrogation par une terminal relative à une assertion portant sur un attribut d'identité du détenteur d'une CNIe.

Le système représenté permet de vérifier si un terminal dispose d'un droit d'interroger un attribut d'identité du détenteur, si la question posée par le terminal est conforme à ce droit et, dans l'affirmative de recevoir une réponse à la question posée sur l'attribut d'identité dudit détenteur.

Plus précisément, le système comprend un terminal d'interrogation, 610, qui peut se présenter sous la forme d'un dispositif de paiement classique voire être intégré dans un tel dispositif. Alternativement, le terminal d'interrogation peut être déporté, seule l'interface de communication (lecteur RFID par exemple) étant située dans le lieu où est effectué le contrôle de l'attribut d'identité.

Le terminal d'interrogation embarque un portefeuille de clés hiérarchique déterministe dont la structure est identique à l'arborescence des attributs d'identité.

Le terminal d'interrogation permet d'obtenir un jeton d'identité (*identity token*) émis par la CNIe, 620. Ce jeton peut prendre la forme d'un nonce signé comme décrit plus haut. La communication entre le terminal peut être une communication sans contact de type BLE ou RFID par exemple, voire une communication par contact physique direct.

Quel que soit le processus d'obtention du jeton d'identité, le terminal (*claim issuer)* est adapté à générer une assertion vérifiable (*claim*) portant sur un attribut d'identité du détenteur de la CNIe, soit $attb_{0,i_1,...,i_N}$.

Le terminal d'interrogation sélectionne dans l'arborescence de son portefeuille HD, le nœud correspondant à l'attribut sur lequel porte cette assertion, autrement dit le compte d'adresse @ $wallet\_account_{0,i_1/../i_N}$.

Le terminal émet alors une transaction à partir de l'adresse @ $wallet\_account_{0,i_1/../i_N}$ à destination d'un contrat intelligent déployé sur la chaine de blocs, 630, par exemple la chaine de blocs Ethereum, après l'avoir signée avec la clé privée $k_{issuer}$ du terminal. La signature est avantageusement une signature ECDSA comprenant trois composantes r,s,v à partir desquelles il est possible de retrouver la clé publique correspondante, $PK_{issuer}$.

La transaction se présente alors la forme suivante :

$$\text{Transaction} = \{$$

$$\text{'from'} : @\,wallet\_account_{0/i_1/.../i_N}$$

$$\text{'to'} : SM\_auth$$

$$...$$

$$\text{'data'} : auth\_method, ID\_token$$

$$\text{'path'} : 0/i_1/i_2/../i_N$$

$$\}$$

$$\text{signée par } k_{issuer}$$

Le champ 'from' spécifie l'adresse du compte qui émet la transaction, en l'occurrence celle associé au nœud de l'arborescence correspondant à l'attribut d'identité sur lequel porte l'assertion.

Le champ 'to' spécifie l'adresse du contrat intelligent déployé dans la chaine de blocs à laquelle la transaction est envoyée.

Le champ 'data' comprend les paramètres de la transaction, notamment l'adresse de branchement du sous-programme (encore appelée méthode) à exécuter dans le contrat intelligent, ainsi que le jeton d'identité reçu par le terminal.

Le champ 'path' spécifie le chemin dans l'arborescence du portefeuille HD conduisant au compte qui émet la transaction. Le cas échéant ce champ comprend également la chaine de code du compte émetteur, $CCK_{issuer}$.

D'autres champs pourront être envisagés sans pour autant sortir du cadre de la présente invention.

Les mineurs (ou valideurs) de la chaine de blocs déterminent dans une première phase si le terminal est bien habilité à émettre une assertion portant sur un attribut d'identité et dans une seconde phase si la transaction émise correspond bien à une telle assertion. En cas de succès, une autorisation est délivrée au terminal et inscrite dans la chaine de blocs.

Dans une première phase, les mineurs vérifient l'enrôlement du terminal, c'est-à-dire que le terminal est habilité à émettre une assertion sur l'attribut d'identité.

Dans le contexte de l'invention, le terminal appartient généralement à une personne morale (commerçant, institution, société, etc.) et son habilitation à émettre une assertion sur un attribut d'identité est délivrée par une autorité compétente.

Cette habilitation est préalablement enregistrée dans la chaine de blocs au moyen d'un second contrat intelligent, $SM\_hab$, distinct du premier, $SM\_auth$. Cet enregistrement peut par exemple prendre la forme d'un certificat numérique signé par l'autorité compétente, émis à partir du compte du terminal (dont l'adresse est le haché de de la clé publique $PK_{issuer}$), ou encore d'une attestation signée par cette autorité, émise à partir d'un compte de cette dernière.

L'enregistrement comprend l'identifiant de l'autorité compétente, par exemple son adresse de compte, la clé publique $PK_{issuer}$, la chaine de code $CCK_{issuer}$ (éventuellement chiffrée) et le chemin $0/i_1/i_2/../i_N$ codant l'attribut d'identité. Cet ensemble d'informations est signé par la clé privée de l'autorité compétente, la signature faisant elle-même partie de l'enregistrement.

Les mineurs vérifient d'abord la signature de l'enregistrement au moyen de la clé publique de l'autorité compétente, puis extraient le chemin $0/i_1/i_2/../i_N$ définissant l'attribut pour lequel le terminal a reçu l'habilitation de formuler une assertion ainsi que la chaine de code du terminal, $CCK_{issuer}$.

Dans une seconde phase, la transaction est vérifiée par les mineurs. Si la transaction est correctement construite, celle-ci est incluse dans le prochain bloc et l'autorisation est inscrite dans la chaine de blocs.

La vérification de la transaction comprend plusieurs étapes.

Tout d'abord, la clé publique $PK_{issuer}$ est extraite de la signature de la transaction émise par le compte émetteur. Cette extraction est obtenue par exemple au moyen de la fonction ECRecover dans Ethereum.

A partir de la clé publique $PK_{issuer}$ de la chaine de code, $CCK_{issuer}$, précédemment obtenue et du chemin spécifié dans le champ « path », soit $0/i_1/i_2/../i_N$, de la transaction on génère la clé publique du compte émetteur selon l'expression (7-1).

On s'assure ensuite que la transaction a bien été émise à partir du compte émetteur en comparant l'adresse $@\,wallet\_account_{0,i_1/../i_N}$ figurant dans le champ 'from' avec le haché de la clé publique générée à l'étape précédente, conformément à l'expression (7-2). C'est précisément cette étape qui permet de confirmer que la transaction émise par le terminal correspond bien à une assertion autorisée, autrement dit pour laquelle il a obtenu une habilitation par l'autorité compétente.

Enfin, on vérifie à l'aide de la clé publique $PK_{issuer}$ que la signature de la transaction est bien correcte.

Si la vérification de l'habilitation et de la transaction est positive, une autorisation est accordée au terminal et celle-ci est inscrite dans la chaine de blocs.

En parallèle à cette double vérification, le terminal transmet une requête à un serveur d'attributs, 640, la requête portant sur l'attribut d'identité faisant l'objet de l'assertion. Cette requête comprend également le jeton d'identité émis par la CNIe.

Le serveur d'attributs 640 consulte alors le registre distribué de la chaine de blocs pour déterminer si une autorisation d'émettre une assertion sur l'attribut d'identité du détenteur de la CNIe a bien été délivrée au terminal. Dans l'affirmative, le serveur d'attributs, 640, demande au serveur de contrôle d'identité, 650, de s'assurer de la validité de la CNIe en lui transmettant le jeton d'identité.

Le serveur de contrôle d'identité, 650, consulte une base de données, 355, gérée par l'état (voire une autorité ayant délégation de compétence), ladite base stockant des informations cryptographiques permettant de vérifier l'existence et la validité des CNIes.

Si le serveur de contrôle d'identité détermine que la CNIe est valide, il en informe le serveur d'attributs. Celui-ci traite alors la requête en accédant à l'attribut demandé dans la base de données attributs, 645, et retourne au terminal la réponse à l'assertion portant sur l'attribut.

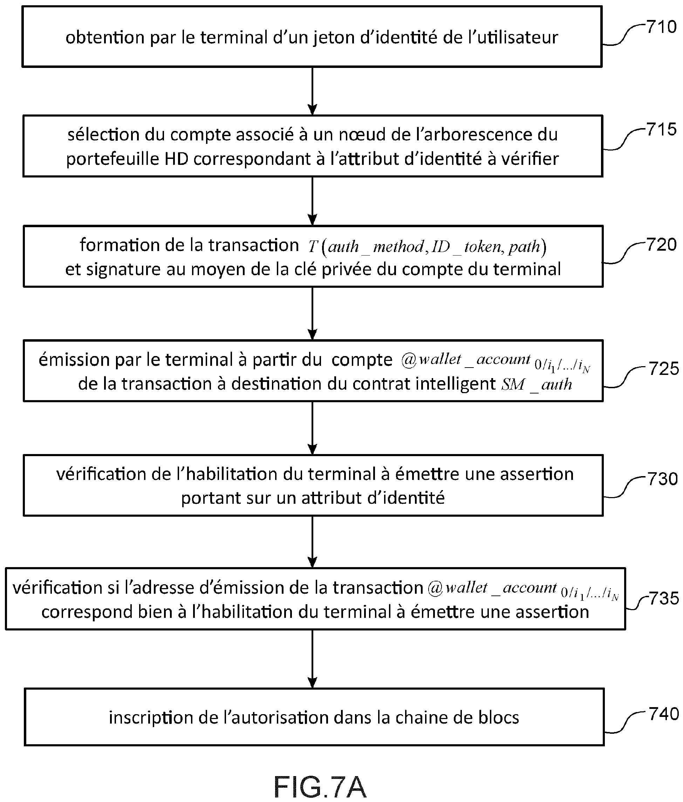

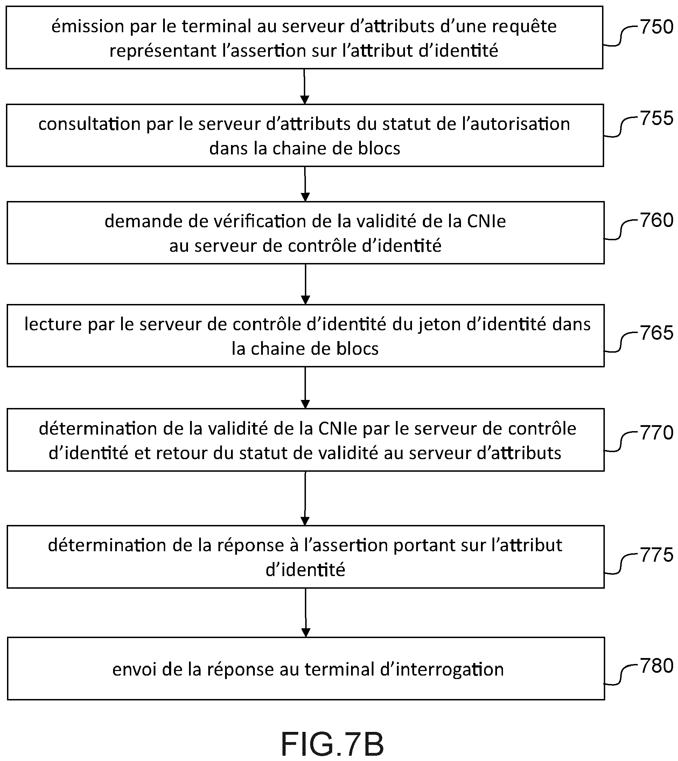

Les Figs. 7A et 7B représentent schématiquement une méthode d'interrogation par un terminal au moyen d'une assertion portant sur un attribut d'identité du détenteur d'une CNIe.

A l'étape 710, le terminal d'interrogation obtient un jeton d'identité, par exemple sous la forme d'un nonce signé par la clé privée associée à l'identité numérique stockée dans la carte d'identité nationale électronique.

A l'étape 715, le terminal d'interrogation sélectionne un nœud dans l'arborescence de son portefeuille de clés HD correspondant à l'attribut d'identité sur lequel il veut faire porter une assertion.

A l'étape 720, le terminal d'interrogation forme une transaction $T(auth\_method,ID\_token,path)$ et la signe au moyen de la clé privée du terminal, $k_{issuer}$.

A l'étape 725, le terminal d'interrogation transmet la transaction ainsi signée au contrat intelligent $SM\_auth$ à partir de l'adresse de compte de portefeuille @ $wallet\_account_{0,i_1/..li_N}$ où $0/i_1/i_2/..li_N$ est le chemin, *path,* définissant l'attribut d'identité en question.

A l'étape 730, on vérifie par consensus l'habilitation du terminal à émettre une assertion portant sur un attribut d'identité.

A l'étape 735, on vérifie par consensus si la transaction émise correspond bien à une assertion sur cet attribut d'identité.

En cas de succès, autrement dit, si les vérifications des étapes 730 et 735 sont positives, une autorisation d'interrogation est inscrite dans la chaine de blocs en 740.

La méthode se poursuit à l'étape 750 en Fig. 7B

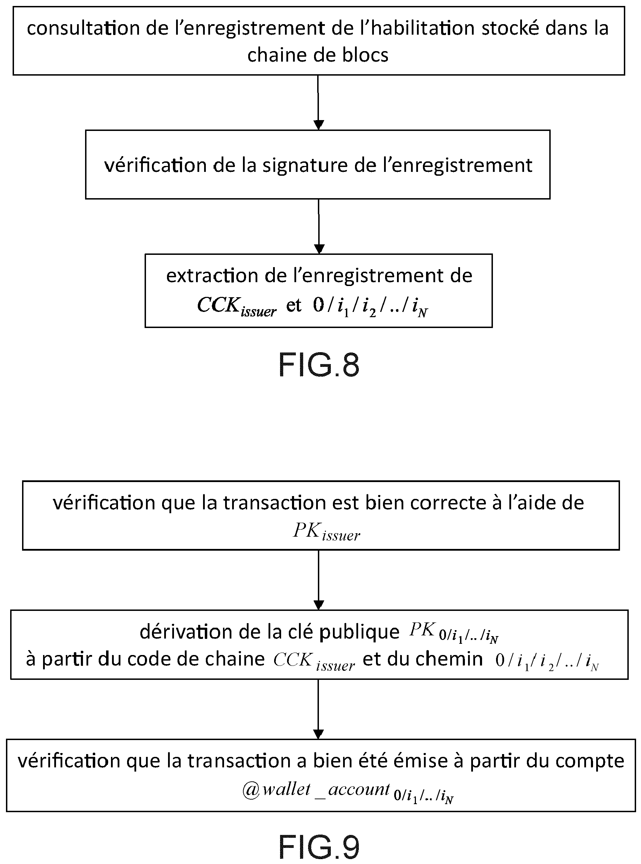

La Fig. 8 détaille l'étape 730 et représente schématiquement une méthode de vérification de l'habilitation d'un terminal à formuler une assertion portant sur un attribut d'identité.

Dans une première étape 810, les mineurs consultent l'enregistrement de l'habilitation stocké dans la chaine de blocs, cet enregistrement pouvant prendre la forme d'un certificat ou d'une attestation signé(e) par l'autorité compétente.

A l'étape 820, on vérifie à l'aide de la clé publique de l'autorité compétente que la signature est correcte et l'on extrait de l'enregistrement la chaine de code $CCK_{issuer}$ ainsi que le chemin $0/i_1/i_2/..li_N$ codant l'attribut d'identité pour lequel l'habilitation d'émettre une assertion est octroyée.

La Fig. 9 détaille l'étape 735 et représente schématiquement une méthode de vérification de la conformité d'une transaction à ladite habilitation du terminal.

Dans une première étape, 910, les mineurs vérifient à l'aide de la clé publique du terminal, $PK_{issuer}$, extraite de la signature, que la transaction a bien été signée par la clé privée correspondante, autrement dit que la signature est bien correcte.

A l'étape 920, à partir de la clé publique, $PK_{issuer}$, de la chaine de code $CCK_{issuer}$ obtenue à l'étape 820 et du chemin $0/i_1/i_2/..li_N$, spécifié dans de champ 'path' de la transaction, on génère la clé publique, $PK_{0,i_1/..li_N}$, du compte de portefeuille spécifié par ce chemin.

A l'étape 930, on s'assure que la transaction a bien été émise par le compte @ $wallet\_account_{0,i_1/..li_N}$ en hachant la clé publique $PK_{0,i_1/..li_N}$ obtenue à l'étape précédente et en la comparant à l'adresse d'émission de la transaction. En d'autres termes, on vérifie par consensus que l'adresse d'émission de la transaction correspond bien à l'attribut d'identité sur lequel le terminal est habilité à émettre une assertion.

Bien entendu, les étapes 920 et 930 peuvent être effectuées avant l'étape 910.

La Fig. 7B représente la suite des opérations de la Fig. 7A.

A l'étape 750, le terminal d'interrogation envoie au serveur d'attributs une requête représentant l'assertion sur l'attribut d'identité. Cette requête comprend également l'identité numérique du détenteur de la CNIe.

A l'étape 755, le serveur d'attributs consulte la chaine de blocs pour déterminer si une autorisation a été délivrée au terminal d'interrogation en relation avec ledit attribut d'identité. Si ce n'est pas le cas, le serveur retourne un message d'erreur au terminal (étape non représentée).

En revanche, si une autorisation est bien inscrite dans la chaine de blocs, le serveur d'attributs demande en 760 au serveur de contrôle d'identité de vérifier la validité de la CNIe en lui transmettant l'identité numérique du détenteur.

Ce dernier lit en 765 le jeton d'identité associé à ladite identité numérique dans la chaine de blocs et à l'étape 770 détermine la validité de la CNIe à partir dudit jeton et de primitives cryptographiques, puis retourne le statut de la carte en question.

Si la carte est valide, le serveur d'attributs détermine la réponse à l'assertion à partir des attributs stockés dans la base d'attributs en 775 et retourne la réponse au terminal en 780.

Il convient de noter que le détenteur de la CNIe pourra consulter la chaine de blocs et déterminer sur quel attribut d'identité portait l'assertion du terminal d'interrogation.

## Revendications

1. Méthode d'interrogation par un terminal d'une carte d'identité électronique, dite CNIe, au moyen d'une assertion portant sur un attribut d'identité du détenteur de cette carte, ledit attribut d'identité faisant partie d'une arborescence d'attributs d'identité, **caractérisée en ce qu'**elle comprend :

   (a) l'obtention (710) par le terminal d'un jeton d'identité du détenteur de la CNIe ;
   (b) la sélection (715) par le terminal d'un compte émetteur associé à un nœud dans l'arborescence d'un portefeuille de clés hiérarchique déterministe, dit portefeuille HD, de même structure que l'arborescence d'attributs d'identité, le nœud sélectionné correspondant de manière univoque à l'attribut d'identité sur lequel porte l'assertion ;
   (c) la formation (720) par le terminal d'une transaction comprenant en arguments au moins le jeton d'identité et le chemin dans l'arborescence du portefeuille conduisant au compte émetteur ;
   (d) l'émission (725) par le terminal de ladite transaction à destination d'un premier contrat intelligent déployé sur une chaine de blocs ;
   (e) la vérification par consensus (730) que le terminal est habilité à émettre une assertion sur ledit attribut d'identité ;
   (f) la vérification (735) par consensus que l'adresse d'émission de la transaction correspond bien à l'attribut d'identité sur lequel le terminal est habilité à émettre une assertion ;
   (g) l'inscription d'une autorisation d'interrogation dans la chaine de blocs si les vérifications des étapes (e) et (f) sont positives.

2. Méthode d'interrogation par un terminal d'une carte d'identité électronique selon la revendication 1, **caractérisée en ce que** le jeton d'identité comprend un identifiant numérique du détenteur de la CNIe ainsi qu'un nonce signé par une clé privée stockée dans la CNIe.

3. Méthode d'interrogation par un terminal d'une carte d'identité électronique selon la revendication 1 ou 2, **caractérisée en ce que** la vérification de l'étape (e) comprend la consultation (810) d'un enregistrement de ladite habilitation dans la chaine de blocs, la vérification (820) d'une signature électronique de cet enregistrement au moyen de la clé publique d'une autorité d'habilitation et, en cas de succès, l'extraction (820) du chemin dans l'arborescence du portefeuille HD conduisant au compte émetteur ainsi que la chaine de code associée au compte du terminal.

4. Méthode d'interrogation par un terminal d'une carte d'identité électronique selon la revendication 3, **caractérisée en ce que** ladite habilitation est enregistrée dans la chaine de blocs au moyen d'un second contrat intelligent distinct du premier.

5. Méthode d'interrogation par un terminal d'une carte d'identité électronique selon la revendication 3 ou 4, **caractérisée en ce que** la vérification à l'étape (f) comprend une vérification (910) que la signature de la transaction est bien correcte au moyen de la clé publique du terminal.

6. Méthode d'interrogation par un terminal d'une carte d'identité électronique selon l'une des revendications 3 à 5, **caractérisée en ce que** la vérification à l'étape (f) comprend en outre un calcul (920) de la clé publique du compte émetteur à partir de la clé publique du terminal, de la chaine de code associée au compte du terminal ainsi que du chemin dans l'arborescence conduisant au compte émetteur.

7.  Méthode d'interrogation par un terminal d'une carte d'identité électronique selon la revendication 6, **caractérisée en ce que** la vérification de l'étape (f) comprend une comparaison de l'adresse du compte émetteur de la transaction avec un haché de la clé publique du compte émetteur ainsi calculée, l'autorisation d'interrogation étant inscrite dans la chaine de blocs en cas d'identité.

8.  Méthode d'interrogation par un terminal d'une carte d'identité électronique selon l'une des revendications précédentes, **caractérisée en ce que** le terminal émet (750) une requête à un serveur d'attributs d'identité, ladite requête représentant ladite assertion sur l'attribut d'identité et que le serveur d'attributs d'identité consulte (755) la chaine de blocs pour déterminer si une autorisation a été délivrée au terminal d'interrogation en relation avec ledit attribut d'identité.

9.  Méthode d'interrogation par un terminal d'une carte d'identité électronique selon la revendication 8, **caractérisée en ce que** si le se serveur d'attributs d'identité détermine que l'autorisation a bien été délivrée, il demande (765) une vérification de la validité de la CNIe à un serveur de contrôle d'identité, ce dernier vérifiant (770) la validité de la CNIe à partir du jeton d'identité lu dans la chaine de blocs.

10. Méthode d'interrogation par un terminal d'une carte d'identité électronique selon la revendication 9, **caractérisée en ce que** si la CNIe est déterminée comme valide, le serveur d'attributs d'identité construit (775) la réponse à l'assertion portant sur l'attribut d'identité à partir d'une base de données de ces attributs et transmet (780) la réponse au terminal.

110　　　　　　　　　120　　　　　　　　　130

| Issuer | Holder | Inspector-Verifier |
|--------|--------|--------------------|
| Issue Claims | Acquire, Store, present Claims | Request Claims |

*Issue Claims*　　　　　　　*Present Claims*

# FIG.1

## Person

**Thing > Person**

A person (alive, dead, undead, or fictional).

[more...]

| Property | Expected Type | Description |
|----------|---------------|-------------|
| **Properties from Person** | | |
| additionalName | Text | An additional name for a Person, can be used for a middle name. |
| address | PostalAddress or Text | Physical address of the item. |
| affiliation | Organization | An organization that this person is affiliated with. For example, a school/university, a club, or a team. |
| alumniOf | EducationalOrganization or Organization | An organization that the person is an alumni of. Inverse property: alumni. |
| award | Text | An award won by or for this item. Supersedes awards. |
| birthDate | Date | Date of birth. |
| birthPlace | Place | The place where the person was born. |
| brand | Brand or Organization | The brand(s) associated with a product or service, or the brand(s) maintained by an organization or business person. |
| children | Person | A child of the person. |

# FIG.2

FIG.3

FIG.4A

FIG.4B

FIG.4C

FIG.6

FIG.5A

FIG.5B

obtention par le terminal d'un jeton d'identité de l'utilisateur $\quad$ 710

sélection du compte associé à un nœud de l'arborescence du portefeuille HD correspondant à l'attribut d'identité à vérifier $\quad$ 715

formation de la transaction $T(auth\_method, ID\_token, path)$ et signature au moyen de la clé privée du compte du terminal $\quad$ 720

émission par le terminal à partir du compte $@wallet\_account_{0/i_1/.../i_N}$ de la transaction à destination du contrat intelligent $SM\_auth$ $\quad$ 725

vérification de l'habilitation du terminal à émettre une assertion portant sur un attribut d'identité $\quad$ 730

vérification si l'adresse d'émission de la transaction $@wallet\_account_{0/i_1/.../i_N}$ correspond bien à l'habilitation du terminal à émettre une assertion $\quad$ 735

inscription de l'autorisation dans la chaine de blocs $\quad$ 740

## FIG.7A

émission par le terminal au serveur d'attributs d'une requête représentant l'assertion sur l'attribut d'identité — 750

consultation par le serveur d'attributs du statut de l'autorisation dans la chaine de blocs — 755

demande de vérification de la validité de la CNIe au serveur de contrôle d'identité — 760

lecture par le serveur de contrôle d'identité du jeton d'identité dans la chaine de blocs — 765

détermination de la validité de la CNIe par le serveur de contrôle d'identité et retour du statut de validité au serveur d'attributs — 770

détermination de la réponse à l'assertion portant sur l'attribut d'identité — 775

envoi de la réponse au terminal d'interrogation — 780

## FIG.7B

consultation de l'enregistrement de l'habilitation stocké dans la chaine de blocs

vérification de la signature de l'enregistrement

extraction de l'enregistrement de $CCK_{issuer}$ et $0/i_1/i_2/../i_N$

## FIG.8

vérification que la transaction est bien correcte à l'aide de $PK_{issuer}$

dérivation de la clé publique $PK_{0/i_1/../i_N}$ à partir du code de chaine $CCK_{issuer}$ et du chemin $0/i_1/i_2/../i_N$

vérification que la transaction a bien été émise à partir du compte $@wallet\_account_{0/i_1/../i_N}$

## FIG.9

Europäisches
Patentamt

European
Patent Office

Office européen
des brevets

**RAPPORT DE RECHERCHE EUROPEENNE**

Numéro de la demande

**EP 22 16 0915**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | HANS MOONEN MARTEN VAN SINDEREN ROEL STEENBERGEN DJURI BAARS: "Towards Self-Sovereign Identity using Blockchain Technology", ITU-T DRAFT; STUDY PERIOD 2017-2020; STUDY GROUP 17, INTERNATIONAL TELECOMMUNICATION UNION, GENEVA ; CH , vol. 10/17 21 juin 2017 (2017-06-21), pages 1-90, XP044199052, Extrait de l'Internet: URL:https://www.itu.int/ifa/t/2017/sg17/exchange/wp4/q10/2017-06-07-Tokyo/Baars_MA_BMS.pdf [extrait le 2017-06-21] | 1,2,8-10 | INV. H04L9/32 |
| A | * abrégé * * Section 2.1.4: "Attribute Based Credentials" * * Section 2.3.1: "Onename.io" * * Section 5.4.3: "Business processes" * ----- | 3-7 | |
| A | White Paper: "IDENTITY: A NEW ASSET CLASS", , 24 avril 2019 (2019-04-24), XP055650961, Extrait de l'Internet: URL:https://kriptan.org/assets/docs/Kriptan_Identity_White%20Paper%204.1.pdf [extrait le 2019-12-09] * le document en entier * ----- | 1-10 | DOMAINES TECHNIQUES RECHERCHES (IPC) H04L |
| A | US 2018/075527 A1 (NAGLA GAURAV [CA] ET AL) 15 mars 2018 (2018-03-15) * abrégé * * alinéas [0084] - [0133] * ----- | 1-10 | |

Le présent rapport a été établi pour toutes les revendications

| Lieu de la recherche | Date d'achèvement de la recherche | Examinateur |
|---|---|---|
| Munich | 8 juillet 2022 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 16 0915

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-07-2022

| Document brevet cité au rapport de recherche | Date de publication | Membre(s) de la famille de brevet(s) | | Date de publication |
|---|---|---|---|---|
| US 2018075527 A1 | 15-03-2018 | CA | 3036725 A1 | 22-03-2018 |
| | | US | 2018075527 A1 | 15-03-2018 |
| | | WO | 2018049523 A1 | 22-03-2018 |

EPO FORM P0460

Pour tout renseignement concernant cette annexe : voir Journal Officiel de l'Office européen des brevets, No.12/82

**EP 4 057 568 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.M. ANTONOPOULOS ; G. WOOD.** Mastering Ethereum. O'Reilly, Décembre 2018, 79-97